# EUROPÄISCHE PATENTANMELDUNG

(11) **EP 4 852 442 A1**
(43) Veröffentlichungstag der Anmeldung: **09.12.2026**
(21) Anmeldenummer: 26177178.6
(22) Anmeldetag: 07.05.2026
(51) Int. Cl.: H04N 23/73, G06V 10/147, H04N 23/80

(54) **KAMERASYSTEM UND VERFAHREN ZUM BETREIBEN EINES KAMERASYSTEMS ZUR ERKENNUNG EINES DURCH EINE FÖRDERVORRICHTUNG BEWEGTEN OBJEKTES**

(30) Priorität: 05.06.2025 DE 102025122205
(71) Anmelder: SICK AG, 79183 Waldkirch (DE)
(72) Erfinder: HAMPF, Marcel, 77955 Ettenheim (DE); HÖGY, Martin, 79271 St. Peter (DE)
(74) Vertreter: Manitz Finsterwald Patent- und Rechtsanwaltspartnerschaft mbB

(57) **Zusammenfassung**

Die Erfindung betrifft ein Kamerasystem und ein Verfahren zum Betreiben eines Kamerasystems zur Erkennung zumindest eines Objektes, das durch eine Fördervorrichtung, insbesondere durch ein Förderband, bewegt wird, wobei das Kamerasystem eine Kameraeinheit mit einem Kameraobjektiv und einem Bildsensor sowie zumindest einen Prozessor umfasst, und wobei das Kamerasystem die folgenden Schritte durchführt, insbesondere kontinuierlich wiederholt:
Konfigurieren, durch den Prozessor, des Kamerasystems gemäß einer ersten Konfigurationseinstellung für Aufnahmen in einem ersten voreinstellbaren oder voreingestellten Schärfebereich;
Aufnehmen, durch die Kameraeinheit, einer ersten Abfolge von Bildern mit einer ersten Bildwiederholrate in dem ersten Schärfebereich, wobei die erste Abfolge von Bildern zumindest ein Bild umfasst;
Konfigurieren, durch den Prozessor, des Kamerasystems gemäß einer zweiten Konfigurationseinstellung für Aufnahmen in einem voreinstellbaren oder voreingestellten zweiten Schärfebereich, wobei der zweite Schärfebereich einen größeren Abstand zum Kamerasystem aufweist als der erste Schärfebereich,
Aufnehmen, durch die Kameraeinheit, einer zweiten Abfolge von Bildern mit einer zweiten Bildwiederholrate in dem zweiten Schärfebereich, wobei die zweite Abfolge von Bildern zumindest ein Bild umfasst und wobei die zweite Bildwiederholrate sich von der ersten Bildwiederholrate unterscheidet; und
Verarbeiten, durch den Prozessor, der Bilddaten der jeweiligen Abfolge von Bildern, um das durch die Fördervorrichtung bewegte Objekt zu erkennen.

## Beschreibung

Die Erfindung betrifft ein Verfahren zum Betreiben eines Kamerasystems zur Erkennung zumindest eines Objektes, das durch eine Fördervorrichtung, insbesondere durch ein Förderband, bewegt wird, wobei das Kamerasystem eine Kameraeinheit mit einem Kameraobjektiv und einem Bildsensor sowie zumindest einen Prozessor umfasst.

Die Schärfentiefe oder auch "Depth of Field (DoF)" ist eine entscheidende Größe bei bildgebundenen Anwendungen zur Erkennung von Objekten in Transportprozessen. Die Schärfentiefe definiert ein Längenmaß für die Ausdehnung des scharfen Bereichs im Objektraum eines abbildenden optischen Systems. Die Schärfentiefe beschreibt somit die Größe des Entfernungsbereichs, innerhalb dessen ein Objekt hinlänglich scharf abgebildet wird. Die bildgebundenen Anwendungen umfassen insbesondere auch das Erkennen von an transportierten Objekten angebrachten 1D-oder 2D Etikettencodes durch einen Codeleser. Hierbei ist es wichtig, alle Objekte, die sich auf der Fördervorrichtung befinden und oft ganz unterschiedlicher Größe sein können, sicher und zuverlässig zu erkennen. In einem typischen Betriebsablauf treten somit sowohl Objekte mit geringem als auch mit sehr gro-βem Leseabstand zum Kamerasystem auf, welche beide in einem geringen zeitlichen Abstand mit derselben Kameraeinheit gelesen, d.h. erfasst und abgebildet werden müssen. Das Lesefeld der Kameraeinheit ist typischerweise pyramidenförmig, wobei das sogenannte Nahfeld bei kleinerem Abstand zur Kameraeinheit ein deutlich kleineres Bildfeld aufweist als das Mittel- und Fernfeld bei größerem Abstand zur Kameraeinheit. Bei gleicher Transportgeschwindigkeit der Objekte im Nahfeld und im Mittel- und Fernfeld wird dadurch für das Nahfeld eine deutlich höhere Bildwiederholrate der Aufnahmen als im Mittel- oder Fernfeld benötigt, um alle Objekte sicher und zuverlässig erfassen zu können und beispielsweise jeden auf einem Objekt angebrachten Etikettencode in mindestes einer Aufnahme vollständig zu erfassen. Dagegen ist ein Objekt im Mittel- und Fernfeld für eine längeren Zeitraum innerhalb des Bildfelds der Kameraeinheit, wodurch die dort benötigte Bildwiederholrate deutlich geringer ausfallen kann als im Nahfeld der Kameraeinheit.

Zur Erzielung einer möglichst großen Schärfentiefe des Kamerasystems kann beispielsweise durch eine integrierte oder externe Beleuchtungseinrichtung die Beleuchtung der transportierten Objekte verstärkt werden. Hierbei stellt sich jedoch das Problem einer großen Helligkeitsdynamik über die verschieden Leseabstände hinweg. Während beispielsweise durch die Beleuchtung im Nahbereich sehr viel Licht für die Aufnahme zur Verfügung stehen kann, kann die Helligkeit bei großen Leseabständen durch die starke Abnahme der Beleuchtungsstärke bereits zu gering sein, um verwertbare Aufnahmen zu erhalten. Somit kann eine sich über einen Entfernungsbereich stark ändernde Ausleuchtung die tatsächlich verfügbare Schärfentiefe reduzieren.

Es kann sich somit als schwierig erweisen, mit nur einer einzigen Systemeinstellung des Kamerasystems sowohl den Nahbereich als auch Mittel- und Fernbereich optimal für Aufnahmen zu konfigurieren. So gestaltet sich im Fernbereich oft die Objekterkennung und die Erfassung der Etikettencodes wegen zu geringer Beleuchtung und zu verrauschten Bildern mit einem geringen Signal-zu-Rausch Verhältnis schwierig. Im Nahbereich kann sich dagegen mit denselben Systemeinstellungen bereits eine Saturation der Bilder einstellen, da der Nahbereich sich mit derselben Systemeinstellung bereits in der Übersteuerung befindet. So lässt sich oft keine einzelne Systemeinstellung finden, welche sowohl im Nahbereich als auch im Mittel- und Fernbereich befriedigende Resultate liefert.

Um die Schärfentiefe des Kamerasystems zu erweitern wurden bisher verschiedene Ansätze verfolgt. Bei einer geringen Transportgeschwindigkeit der Fördervorrichtung kann beispielsweise ein Kamerasystem mit einer dynamischen Fokussteuerung ausgestattet werden, welche die Fokuseinstellung an den jeweiligen Leseabstand des transportierten Objektes anpasst. Bei größeren Transportgeschwindigkeiten wird dagegen oft versucht, die Schärfentiefe des Kamerasystems algorithmisch zu erweitern, oder über zusätzliche Optikelemente und/oder die Beleuchtung das Lesefeld zu erweitern. Darüber hinaus wurde auch versucht, durch den tatsächlichen Aufnahmen vorgeschaltete Einstellungs-Aufnahmen, sogenannten "Pre-Shots", eine optimale optische Einstellung des Kamerasystems zu erreichen. Hierbei sind jedoch die Möglichkeiten, die Schärfentiefe des Kamerasystems algorithmisch zu erweitern sehr begrenzt. Auch kann die Schärfentiefe algorithmisch bei weitem nicht so stark vergrößert werden, als es für die Anwendungen erforderlich wäre. Dagegen benötigen die Aufnahmen der Pre-Shots eine dauerhafte Aktivierung der Beleuchtung, was zusätzliche Anforderungen an die Beleuchtungseinrichtung hinsichtlich Leistung und Wärmeableitung stellt. Zudem stellen Pre-Shots erhöhte Anforderungen an die Geschwindigkeit der Bildverarbeitung im Kamerasystem, was meist zusätzliche Rechenleistung erfordert, um die eigentliche Dekodierung der Etikettencodes in den aufgenommenen Bildern nicht durch die Verarbeitung der Pre-Shots zu beeinträchtigen.

Es ist daher eine Aufgabe der Erfindung, ein verbessertes Verfahren zum Betreiben eines Kamerasystems anzugeben, mittels dessen transportierte Objekte verschiedener Größe einfach, zuverlässig, sicher und kostengünstig erkannt werden können.

Die Aufgabe wir durch ein Verfahren gemäß dem Anspruch 1 gelöst, und insbesondere dadurch, dass das Kamerasystem die folgenden Schritte durchführt, insbesondere kontinuierlich wiederholt:
Konfigurieren, durch den Prozessor, des Kamerasystems gemäß einer ersten Konfigurationseinstellung für Aufnahmen in einem ersten voreinstellbaren oder voreingestellten Schärfebereich;
Aufnehmen, durch die Kameraeinheit, einer ersten Abfolge von Bildern mit einer ersten Bildwiederholrate in dem ersten Schärfebereich, wobei die erste Abfolge von Bildern zumindest ein Bild umfasst;
Konfigurieren, durch den Prozessor, des Kamerasystems gemäß einer zweiten Konfigurationseinstellung für Aufnahmen in einem voreinstellbaren oder voreingestellten zweiten Schärfebereich, wobei der zweite Schärfebereich einen größeren Abstand zum Kamerasystem aufweist als der erste Schärfebereich,
Aufnehmen, durch die Kameraeinheit, einer zweiten Abfolge von Bildern mit einer zweiten Bildwiederholrate in dem zweiten Schärfebereich, wobei die zweite Abfolge von Bildern zumindest ein Bild umfasst und wobei die zweite Bildwiederholrate sich von der ersten Bildwiederholrate unterscheidet; und
Verarbeiten, durch den Prozessor, der Bilddaten der jeweiligen Abfolge von Bildern, um das durch die Fördervorrichtung bewegte Objekt zu erkennen.

Das Kamerasystem kann beispielsweise als Zeilenkamera oder als flächige 2D-Kamera ausgebildet sein. Die Kameraeinheit des Kamerasystems nimmt nach einem festen Schema eine erste Abfolge von Bildern mit einer ersten Bildwiederholrate in einem ersten Schärfebereich auf, gefolgt von der Aufnahme einer zweiten Abfolge von Bildern mit einer zweiten Bildwiederholrate in einem zweiten Schärfebereich, wobei der zweite Schärfebereich einen größeren Abstand zum Kamerasystem aufweist als der erste Schärfebereich und wobei die zweite Bildwiederholrate sich von der ersten Bildwiederholrate unterscheidet. Die erste Abfolge von Bildern und die zweite Abfolge von Bildern werden somit von derselben Kameraeinheit und mit demselben Bildsensor aufgenommen. Hierbei kann die erste Abfolge von Bildern und die zweite Abfolge von Bildern jeweils ein Bild oder mehrere Bilder umfassen.

Der Schärfebereich versteht sich als der räumliche Bereich vor und hinter der Fokus- bzw. Schärfeebene, wobei in dem Schärfebereich das Objekt durch das jeweilige Kameraobjektiv scharf abgebildet wird. Der Abstand zu einem jeweiligen Schärfebereich kann insbesondere von dem Kamerasystem zu der Schärfeebene des jeweiligen Schärfebereichs oder von dem Kamerasystem zu dem Kamerasystem nächsten Punkt des Schärfebereichs gemessen werden.

Der erste Schärfebereich und der zweite Schärfebereich sind voreinstellbar oder voreingestellt. Die Voreinstellung ist derart gewählt, dass die räumliche Position der Schärfebereich und/oder die Größe, d.h. die Ausdehnung des ersten und des zweiten Schärfebereichs, an die Abstandverhältnisse zwischen der Fördervorrichtung und der Position des Kamerasystems angepasst sind. Hierbei kann der erste Schärfebereich und der zweite Schärfebereich so eingestellt werden, dass der Abstandbereich des ersten Schärfebereichs bündig und ohne Unterbrechung an den Abstandbereich des zweiten Schärfebereichs angrenzt. Alternativ können die Schärfebereiche auch so eingestellt werden, dass die jeweiligen Abstandsbereiche einen Überlapp oder Überschneidung aufweisen. Als weitere Alternative können der erste und zweite Schärfebereich derart eingestellt werden, dass die jeweiligen Abstandbereiche nicht aneinander angrenzen und zwei separate Abstandsbereiche bilden, die durch eine Unterbrechung voneinander getrennt sind.

Der erste Schärfebereich kann sich beispielsweise auf den Nahbereich und der zweite Schärfebereich auf den Mittel- oder Fernbereich des Kamerasystems beziehen. Die Aufnahmen der ersten Abfolge und der zweiten Abfolge von Bildern erfolgen mit für den jeweiligen Schärfebereich angepassten und optimierten Konfigurationseinstellungen des Kamerasystems gemäß der ersten Konfigurationseinstellung oder der zweiten Konfigurationseinstellung. So wird gewährleistet, dass sowohl die Bilder des ersten Schärfebereichs als auch die Bilder des zweiten Schärfebereichs eine ausreichende Qualität besitzen, um ein durch die Fördervorrichtung bewegtes Objekt sicher zu erkennen.

Die Konfigurationseinstellungen können beispielsweise in einer oder mehreren Dateien vorliegen, welche relevante Parameterwerte und Einstellungen des Kamerasystems enthalten, um optimale Aufnahmen in dem jeweiligen Schärfebereich zu ermöglichen. Der Prozessor kann das Kamerasystem basierend auf den in der Datei oder in den Dateien hinterlegten Konfigurationseinstellungen konfigurieren.

Der Prozessor ist dazu ausgebildet, Bilddaten des Bildsensors zu verarbeiten. Der Schritt des Erkennens der Objekte kann insbesondere das Erfassen und Erkennen von 1D- und/oder oder 2D Etikettencodes auf den Objekten umfassen. Die Verarbeitung der Bilddaten erfolgt, nachdem die Bilddaten der ersten Abfolge von Bildern oder der zweiten Abfolge von Bildern vorhanden und für den Prozessor zur Verarbeitung verfügbar sind. Das Verarbeiten der Bilder der ersten Abfolge von Bildern kann nach Beendigung der Aufnahmen der nachfolgenden zweiten Abfolge von Bildern erfolgen. Das Verarbeiten der Bilder der jeweiligen Abfolge von Bildern kann jedoch auch direkt nach Beendigung der Aufnahmen der jeweiligen Abfolge von Bildern erfolgen.

Der Prozessor kann beispielsweise einen FPGA (Field Programmable Gate Array) oder einen Prozessor auf x86- oder ARM-Architektur umfassen. Der Prozessor kann weiterhin einen Applikationsprozessor umfassen, welcher z.B. über PCI-Express (PCle) mit dem FPGA gekoppelt ist, wobei der Applikationsprozessor beispielsweise die Erkennung der Etikettencodes in den Bilddaten des Bildsensors vornimmt. Bei dem Applikationsprozessor kann es sich z.B. um einen Prozessor der Serien i.MX 6, i.MX 8 oder i.MX 9 der Firma NXP handeln.

Das erfindungsgemäße Verfahren beruht auf einem festen Schema einer abwechselnden Abfolge von Aufnahmen in zwei unterschiedlichen Schärfebereichen mit auf den jeweiligen Schärfebereich abgestimmten Konfigurationseinstellungen. Es ist deshalb einfach und kostengünstig umzusetzen. Das Verfahren gewährleistet, das sowohl für den ersten als auch für den zweiten Schärfebereich kontinuierlich Bilder vergleichbar hoher Qualität erhalten werden, die ein zuverlässiges und sicheres Erkennen der Objekte ermöglichen, unabhängig davon, ob das Objekt einen großen oder einen kleinen Leseabstand zum Kamerasystem und dessen Kameraeinheit aufweist.

Das erfindungsgemäße Verfahren ermöglicht somit, transportierte Objekte verschiedener Größe mittels des Kamerasystems einfach, zuverlässig, sicher und kostengünstig zu erkennen.

Vorteilhafte Ausführungsformen sind den abhängigen Ansprüchen, der Beschreibung und der Zeichnung zu entnehmen.

Gemäß einer Ausführungsform weist die Anzahl der Bilder der ersten Abfolge von Bildern und der zweiten Abfolge von Bildern jeweils einen voreinstellbaren oder voreingestellten konstanten Wert auf. Die Aufnahme der Bilder im ersten Schärfebereich und im zweiten Schärfebereich erfolgen somit nach einem konstanten festen Schema, bei welchem nach der Aufnahme einer voreinstellbaren oder voreingestellten Anzahl von Bildern im ersten Schärfebereich die Aufnahme einer voreinstellbaren oder voreingestellten Anzahl von Bildern im zweiten Schärfebereich erfolgt. Die Anzahl der im jeweiligen Schärfebereich aufgenommenen Bilder ist jeweils zeitlich konstant und insbesondere nicht abhängig von Merkmalen oder Parametern des Objektes wie beispielsweise der jeweiligen Größe des transportierten Objektes. Durch die regelmäßige Abfolge von Bildern ist das Verfahren sehr einfach und kostengünstig umzusetzen.

Gemäß einer Ausführungsform ist die Anzahl der Bilder der ersten Abfolge von Bildern größer ist als die Anzahl der Bilder der zweiten Abfolge von Bildern. Ein Objekt im ersten Schärfebereich bewegt sich bei gegebener Transportgeschwindigkeit der Fördervorrichtung schneller durch das Bildfeld der Kameraeinheit als ein Objekt im weiter entfernten zweiten Schärfebereich. Zudem ist das Bildfeld im ersten Schärfebereich geometriebedingt kleiner als im zweiten Schärfebereich. Es wird somit in der ersten Abfolge von Bildern im ersten Schärfebereich eine größere Anzahl von Bildern benötigt als in der zweiten Abfolge von Bildern im zweiten Schärfebereich. Durch die größere Anzahl der Bilder der ersten Abfolge von Bildern wird gewährleistet, dass möglichst jedes Objekt im ersten Schärfebereich zuverlässig erkannt werden kann. Eine gleich oder vergleichbar große Anzahl von Aufnahmen in der zweiten Abfolge von Bildern würde dagegen zu oftmals redundanten Bilddaten führen, deren Verarbeitung zu einer unnötig hohen Prozessorlast führen würde. Die Anzahl der Bilder der zweiten Abfolge von Bildern kann somit im Vergleich zur Anzahl der Bilder der ersten Abfolge von Bildern verkleinert werden. Insbesondere kann die zweite Abfolge von Bildern ein einziges Bild umfassen.

Gemäß einer Ausführungsform weist die Gesamtheit der Bilder in dem ersten Schärfebereich eine Taktrate auf, welche größer ist als eine Taktrate der Gesamtheit der Bilder in dem zweiten Schärfebereich. Der zweite Schärfebereich weist einen größeren Abstand zum Kamerasystem auf als der erste Schärfebereich. Wie oben ausgeführt ist deshalb das Bildfeld der Aufnahmen des zweiten Schärfebereichs größer als das Bildfeld der Aufnahmen des ersten Schärfebereichs. Gleichzeitig weisen im entfernter gelegenen zweiten Schärfebereich aufgenommene Objekte bei gegebener Transportgeschwindigkeit der Fördervorrichtung eine geringere relative Geschwindigkeit auf als Objekte, welche im näher gelegenen ersten Schärfebereich aufgenommen wurden. Die Aufnahmen der Gesamtheit von Bildern im zweiten Schärfebereich können deshalb eine geringere, insbesondere deutlich geringere, Taktrate aufweisen als die Aufnahmen der Gesamtheit von Bildern im ersten Schärfebereich. Dabei gilt insbesondere, dass die erste Bildwiederholrate der Bilder der ersten Abfolge von Bildern im ersten Schärfebereich größer als die zweite Bildwiederholrate der Bilder der zweiten Abfolge von Bildern im zweiten Schärfebereich.

Gemäß einer Ausführungsform ist eine Taktrate aller Aufnahmen der ersten Abfolge und der zweiten Abfolge von Bildern zumindest gleich groß ist wie eine für eine Erkennung des Objektes im ersten Schärfebereich benötigte Taktrate, insbesondere wobei die benötigte Taktrate abhängig von der Fördergeschwindigkeit des Fördervorrichtung ist. Durch die abwechselnde Aufnahme von optimierten Bildern im ersten Schärfebereich und im zweiten Schärfebereich wird somit die Taktrate aller Aufnahmen der ersten Abfolge und der zweiten Abfolge von Bildern nicht unter eine für das zuverlässige Erkennen von Objekten im ersten Schärfebereich benötigte Taktrate verkleinert. Die benötigte Taktrate ist dabei insbesondere abhängig von der Transportgeschwindigkeit der Fördervorrichtung und den abstandsmäßigen Begrenzungen des ersten Schärfebereichs. Die benötigten Taktraten des ersten Schärfebereichs liegen oft im zweistelligen bis dreistelligen Hz Bereich (z.B. 20 bis 700 Hz, insbesondere 50 bis 200 Hz). Die benötigten Taktraten für eine zuverlässige Erkennung von Objekten im zweiten Schärfebereich sind kleiner und können auch im einstelligen Hz Bereich liegen (z.B. 2 bis 40 Hz, insbesondere 5 bis 30 Hz).

Gemäß einer Ausführungsform weist die Gesamtheit der Bilder in dem ersten Schärfebereich eine Bildwiederholrate auf, welche konstant ist und der ersten Bildwiederholrate entspricht. Die Aufnahmen der Gesamtheit der Bilder in dem ersten Schärfebereich weisen somit über verschiedene nacheinander aufgenommene erste Abfolgen von Bildern eine konstante Bildwiederholrate auf, welche der ersten Bildwiederholrate entspricht. Die Gesamtheit der Bilder im ersten Schärfebereich bildet somit einen konstanten Strom von Aufnahmen, die zeitlich jeweils gleich beabstandet sind. Insbesondere entspricht die Bildwiederholrate zwischen jedem letzten Bild einer ersten Abfolge von Bildern und einem ersten Bild einer nachfolgenden ersten Abfolge von Bildern der ersten Bildwiederholrate. Die Aufnahme der Bilder der zweiten Abfolge von Bildern in dem zweiten Schärfebereich erfolgt insbesondere zeitlich äquidistant zwischen zwei Aufnahmen in dem ersten Schärfebereich. Die Aufnahmen des zweiten Schärfebereichs werden somit sozusagen in den konstanten Strom der Aufnahmen des ersten Schärfebereichs eingeschoben. Durch den Einschub der Bilder des zweiten Schärfebereichs erhöht sich die Bildwiederholrate benachbarter Aufnahmen des ersten Schärfebereichs und des zweiten Schärfebereichs, die Bildwiederholrate ist insbesondre größer als die erste Bildwiederholrate der Bilder der ersten Abfolge von Bildern.

Gemäß einer Ausführungsform weist die Gesamtheit der Bilder in dem ersten Schärfebereich eine nicht konstante Bildwiederholrate auf. Die Gesamtheit der Bilder in dem ersten Schärfebereich bildet somit keinen konstanten Strom von zeitlich jeweils gleich beabstandeten Aufnahmen. Vielmehr kann der zeitliche Abstand zwischen zwei benachbarten ersten Abfolgen von Bildern in dem ersten Schärfebereich kleiner oder größer sein als der durch die erste Bildwiederholrate gegebene zeitliche Abstand zwischen zwei Aufnahmen der jeweiligen ersten Abfolge von Bildern.

Gemäß einer Ausführungsform ist die Bildwiederholrate zwischen jedem letzten Bild einer ersten Abfolge von Bildern und einem ersten Bild einer nachfolgenden ersten Abfolge von Bildern kleiner ist als die erste Bildwiederholrate. Zwischen zwei benachbarten ersten Abfolgen von Bildern in dem ersten Schärfebereich entsteht somit eine zeitliche Lücke, die größer ist als der durch die erste Bildwiederholrate gegebene zeitliche Abstand der Bilder der ersten Abfolge von Bildern. Die Aufnahme der Bilder der zweiten Abfolge von Bildern im zweiten Schärfebereich erfolgt demnach in einer vergrößerten zeitlichen Lücke zwischen zwei benachbarten ersten Abfolgen von Bildern im ersten Schärfebereich. Die Aufnahme der Bilder der zweiten Abfolge von Bildern kann insbesondere zeitlich äquidistant zu den jeweiligen begrenzenden Aufnahmen der benachbarten ersten Abfolgen von Bildern erfolgen. Die Bildwiederholrate der benachbarten Aufnahmen des ersten und des zweiten Schärfebereichs kann somit insbesondere der ersten Bildwiederholrate der Aufnahmen der ersten Abfolge von Bildern im ersten Schärfebereich entsprechen. Die Aufnahme der Bilder der zweiten Abfolge von Bildern kann nach diesem Ablauf folglich zu Zeitpunkten erfolgen, die einer kontinuierlichen Fortführung der Aufnahmen der ersten Abfolge von Bildern gemäß der ersten Bildwiederholrate entsprechen. Hierbei kann die zweite Abfolge von Bildern in dem zweiten Schärfebereich genau ein Bild umfassen. In diesem Falle ersetzt sozusagen die Aufnahme des Bildes im zweiten Schärfebereich eine Aufnahme eines Bildes im ersten Schärfebereich, wobei die Taktrate der Aufnahmen beibehalten wird und der ersten Bildwiederholrate entspricht.

Gemäß einer Ausführungsform umfasst das Verfahren zusätzlich die folgenden Schritte:
Konfigurieren des Kamerasystems gemäß einer dritten Konfigurationseinstellung für Aufnahmen in zumindest einem voreinstellbaren oder voreingestellten dritten Schärfebereich, wobei der dritte Schärfebereich einen größeren Abstand zum Kamerasystem aufweist als der zweite Schärfebereich, und
Aufnehmen einer dritten Abfolge von Bildern mit einer dritten Bildwiederholrate in dem dritten Schärfebereich, wobei die dritte Abfolge von Bildern zumindest ein Bild umfasst.

Bei Aufnahmen in drei Schärfebereichen kann der erste Schärfebereich beispielsweise dem Nahbereich, der zweite Schärfebereich dem Mittelbereich und der dritte Schärfebereich dem Fernbereich der Kameraeinheit entsprechen. Da die Objekte im dritten Schärfebereich sich länger im Bildfeld der Kameraeinheit befinden, kann die Taktrate der Gesamtheit der Bilder der dritten Abfolge von Bildern geringer sein als die Taktrate der Gesamtheit der Bilder der ersten Abfolge von Bildern und/oder der Taktrate der Gesamtheit der Bilder der zweiten Abfolge von Bildern. Es versteht sich, dass auch mehrere verschiedene dritte Schärfebereiche vorgesehen sein können.

Gemäß einer Ausführungsform weist die Anzahl der Bilder der dritten Abfolge von Bildern einer voreinstellbaren oder voreingestellten Wert auf, wobei die Anzahl der Bilder der dritten Abfolge von Bildern kleiner ist als die Anzahl der Bilder der ersten Abfolge von Bildern. Der dritte Schärfebereich weist einen noch größeren Abstand zur Kameraeinheit auf als der zweite Schärfebereich. Die Anzahl der Bilder der dritten Abfolge von Bildern kann somit ähnlich gering oder noch kleiner sein als die Anzahl der Bilder der zweiten Abfolge von Bildern.

Gemäß einer Ausführungsform umfasst das Konfigurieren des Kamerasystems für Aufnahmen in dem jeweiligen Schärfebereich das Anpassen der Belichtungszeit der Aufnahmen und/oder der Gain-Einstellung des Bildsensors und/oder der Bildauflösung des Bildsensors an den jeweiligen Schärfebereich. Die jeweiligen Konfigurationseinstellungen können somit verschiedene Werte für die Belichtungszeit aufweisen. Insbesondere können die Aufnahmen des zweiten und/oder des dritten Schärfebereichs eine höhere Belichtungszeit aufweisen als die Aufnahmen des ersten Schärfebereichs. Auch kann die Konfigurationseinstellung des Bildsensors für den ersten Schärfebereich eine andere Gain-Einstellung aufweisen als für den zweiten und/oder den dritten Schärfebereich. Dadurch kann eine optimale Ausbeute der vom Objekt zum Bildsensor reflektierten elektromagnetischen Strahlung erzielt werden. Insbesondere kann durch eine Änderung der Gain-Einstellung des Bildsensors verhindert werden, dass in den Bildern des ersten Schärfebereichs Saturation auftritt. Auch kann die Bildauflösung des Bildsensors an den jeweiligen Schärfebereich angepasst sein. So nimmt ein im Nahbereich aufgenommenes Objekt eine größere Fläche im Bild ein als ein im Mittel- oder Fernbereich aufgenommenes Objekt gleicher Größe. Ein auf dem Objekt angebrachter Etikettencode umfasst somit in einer Aufnahme des Nahbereichs eine größere Anzahl Pixel als in einer Aufnahme des Mittel- oder Fernbereichs. Der Etikettencode erscheint folglich im Nahbereich höher aufgelöst als Mittel- oder Fernbereich. Da eine derartige höhere Auflösung für die gewählte Anwendung möglicherweise nicht erforderlich ist, könnte die Bildauflösung des Bildsensors für die Aufnahmen im Nahbereich daher reduziert werden. Dies hätte beispielsweise Vorteile hinsichtlich der Dauer des Verarbeitens der Bilddaten, des Erkennens der Objekte und der etwaigen Dekodierung von auf den Objekten angebrachten Etikettencodes. Die reduzierte Dauer der Bildverarbeitung ist hierbei insbesondere mit Blick auf die im Nahbereich benötigte höhere Taktrate der Aufnahmen von Vorteil.

Gemäß einer Ausführungsform weist das Kamerasystem zusätzlich eine Beleuchtungseinrichtung zum Beleuchten des Objektes auf und das Konfigurieren des Kamerasystems für Aufnahmen in dem jeweiligen Schärfebereich umfasst das Anpassen der Beleuchtungsstärke der Beleuchtungseinrichtung an den jeweiligen Schärfebereich. Die jeweiligen Konfigurationseinstellungen können somit verschiedene Werte für die Beleuchtungsstärke der Beleuchtungseinrichtung aufweisen. Insbesondere kann für die Aufnahmen des zweiten und/oder des dritten Schärfebereichs die Beleuchtungsstärke im Vergleich zu den Aufnahmen des ersten Schärfebereichs erhöht werden. Denkbar ist hierbei auch, dass die Beleuchtungseinrichtung ausschließlich für die Aufnahmen des zweiten und/oder des dritten Schärfebereichs aktiviert wird und ansonsten inaktiv ist. Dadurch kann der Betrieb der Beleuchtungseinrichtung kostengünstig gestaltet werden.

Gemäß einer Ausführungsform umfasst das Konfigurieren des Kamerasystems für Aufnahmen in dem jeweiligen Schärfebereich das Setzen einer Fokuseinstellung des Kameraobjektivs für den jeweiligen Schärfebereich. Das Setzen der Fokuseinstellung gewährleistet, dass Objekte unterschiedlicher Größe und mit unterschiedlichen Abständen zum Kamerasystem und zur Kameraeinheit in den aufgenommenen Bildern scharf abgebildet werden können.

Gemäß einer Ausführungsform erfolgt das Verarbeiten der Bilddaten der jeweiligen Abfolge von Bildern mit jeweils an den Schärfebereich angepassten Algorithmen und/oder jeweils and den Schärfebereich angepassten Parametern. Die Anpassung der Algorithmen und/oder deren Parameter kann beispielsweise die unterschiedliche Größe und/oder die unterschiedliche Auflösung der Objekte in den Bildern der verschiedenen Schärfebereiche umfassen.

Die Aufgabe wird weiterhin durch ein Kamerasystem zur Erkennung zumindest eines Objektes, das durch eine Fördervorrichtung, insbesondere durch ein Förderband, bewegt wird gemäß dem Anspruch 15 gelöst, wobei das Kamerasystem eine Kameraeinheit mit einem Kameraobjektiv und einem Bildsensor sowie zumindest einen Prozessor umfasst, und wobei das Kamerasystem dazu ausgebildet ist, die folgenden Schritte durchzuführen, insbesondere kontinuierlich zu wiederholen:
Konfigurieren, durch den Prozessor, des Kamerasystems gemäß einer ersten Konfigurationseinstellung für Aufnahmen in einem ersten voreinstellbaren oder voreingestellten Schärfebereich;
Aufnehmen, durch die Kameraeinheit, einer ersten Abfolge von Bildern mit einer ersten Bildwiederholrate in dem ersten Schärfebereich, wobei die erste Abfolge von Bildern zumindest ein Bild umfasst;
Konfigurieren, durch den Prozessor, des Kamerasystems gemäß einer zweiten Konfigurationseinstellung für Aufnahmen in einem voreinstellbaren oder voreingestellten zweiten Schärfebereich, wobei der zweite Schärfebereich einen größeren Abstand zum Kamerasystem aufweist als der erste Schärfebereich, und
Aufnehmen, durch die Kameraeinheit, einer zweiten Abfolge von Bildern mit einer zweiten Bildwiederholrate in dem zweiten Schärfebereich, wobei die zweite Abfolge von Bildern zumindest eine Bild umfasst und wobei die zweite Bildwiederholrate sich von der ersten Bildwiederholrate unterscheidet; und
Verarbeiten, durch den Prozessor, der Bilddaten der jeweiligen Abfolge von Bildern, um das durch die Fördervorrichtung bewegte Objekt zu erkennen.

Das erfindungsgemäße Kamerasystem ist dazu ausgebildet, das erfindungsgemäßen Verfahren oder eines seiner Ausführungsformen durchzuführen. Die Ausführungen zu dem Verfahren und zu den Ausführungsformen gelten entsprechend.

Die Erfindung wird nachfolgend lediglich beispielhaft anhand der Figuren erläutert.
Fig. 1 zeigt eine schematische Seitenansicht einer Etikettenerkennungsvorrichtung mit einer Ausführungsform eines erfindungsgemäßen Kamerasystems,
Fig. 2 zeigt eine schematische Darstellung einer Ausführungsform eines erfindungsgemäßen Verfahrens zum Betreiben des Kamerasystems der Fig. 1, und
Fig. 3 zeigt eine schematische Darstellung einer weiteren Ausführungsform eines erfindungsgemäßen Verfahrens zum Betreiben des Kamerasystems der Fig. 1.

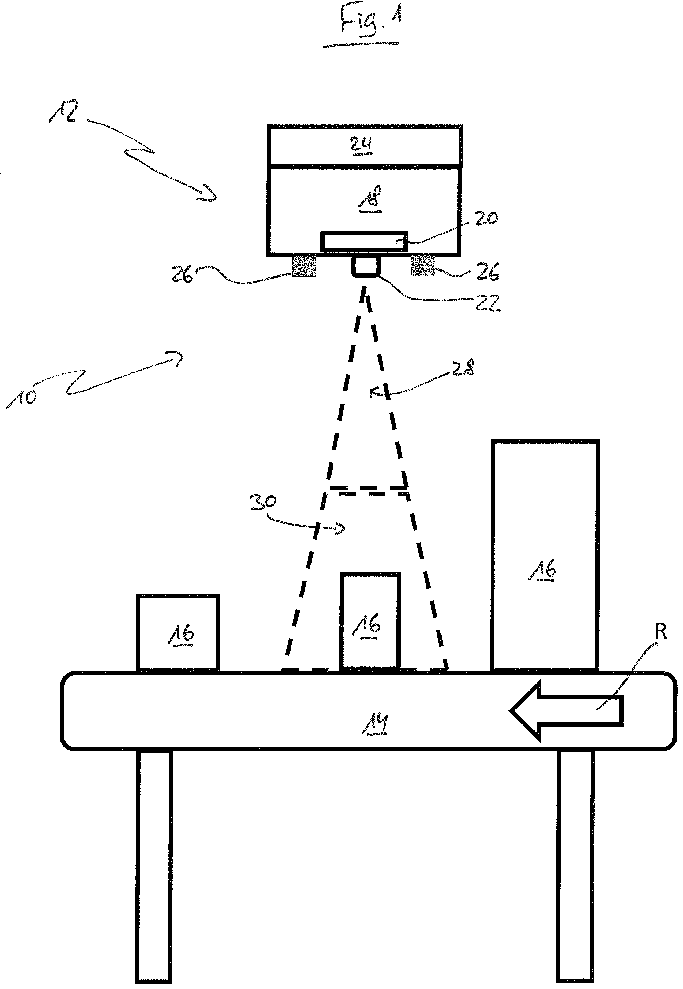

Fig. 1 zeigt eine schematische Seitenansicht einer Etikettenerkennungsvorrichtung 10 mit einer Ausführungsform eines erfindungsgemäßen Kamerasystems 12. Das Kamerasystem 12 kann beispielsweise als Zeilenkamera oder als flächige 2D-Kamera ausgebildet sein. Das Kamerasystem 12 ist oberhalb eines Förderbands 14 angeordnet, auf welchem mehrere Pakete 16 (d.h. Objekte) unterschiedlicher Größe in Förderrichtung R bewegt werden. Die Förderrichtung R ist in der Fig. 1 durch einen Pfeil dargestellt.

Das Kamerasystem 12 umfasst eine Kameraeinheit 18 mit einem Bildsensor 20 und einem Kameraobjektiv 22. Die Kameraeinheit 18 ist in Richtung des Förderbands 14 ausgerichtet. Das Kamerasystem 12 umfasst weiterhin einen Prozessor 24 und eine Beleuchtungseinrichtung 26 zum Beleuchten der Pakete 16 auf dem Förderband 14.

Das Kamerasystem 12 ist dazu ausgebildet, Bilder der auf dem Förderband 14 transportierten Pakete 16 in verschiedenen Schärfebereichen durch den Bildsensor 20 aufzunehmen und in dem Prozessor 24 zu verarbeiten, um die transportierten Pakete 16 zu erkennen und auf den Paketen 16 angebrachte 1D- und/oder oder 2D Etikettencodes zu erfassen und zu erkennen.

Das Bildfeld der Kameraeinheit 18 weist einen pyramidenförmigen Aufbau auf und lässt sich in einen ersten Schärfebereich 28 und einen zweiten Schärfebereich 30 unterteilen, wobei der zweite Schärfebereich 30 einen größeren Abstand zur Kameraeinheit 18 aufweist als der erste Schärfebereich 28. Der jeweilige Schärfebereich 28, 30 ist voreinstellbar oder voreingestellt und versteht sich als der räumliche Bereich vor und hinter der Fokus- bzw. Schärfeebene, wobei in dem Schärfebereich ein Objekt durch das Kameraobjektiv 22 scharf abgebildet wird. In der Darstellung der Fig. 1 entspricht der erste Schärfebereich dem Nahfeld des Kamerasystems 12 und der zweite Schärfebereich dem Mittel- und Fernfeld des Kamerasystems 12.

Die Aufnahme der Bilder in dem ersten Schärfebereich 28 und in dem zweiten Schärfebereich 30 erfolgt nach einem festen regelmäßigen Schema, wobei das Kamerasystem 12 die folgenden Schritte kontinuierlich wiederholt. Zunächst wird das Kamerasystem 12 durch den Prozessor 24 gemäß einer ersten Konfigurationseinstellung für Aufnahmen in dem ersten Schärfebereich 28 konfiguriert, woraufhin die Kameraeinheit 18 eine ersten Abfolge von Bildern mit einer ersten Bildwiederholrate in dem ersten Schärfebereich 28 aufnimmt, wobei die erste Abfolge von Bildern zumindest ein Bild umfasst. Daraufhin wird das Kamerasystem 12 gemäß einer zweiten Konfigurationseinstellung für Aufnahmen in dem zweiten Schärfebereich 30 konfiguriert, woraufhin die Kameraeinheit 12 eine zweite Abfolge von Bildern mit einer zweiten Bildwiederholrate in dem zweiten Schärfebereich 30 aufnimmt, wobei die zweite Abfolge von Bildern zumindest ein Bild umfasst und wobei die zweite Bildwiederholrate sich von der ersten Bildwiederholrate unterscheidet. Die jeweilige Abfolge von Bildern wird von dem Prozessor 24 verarbeitet, um das auf dem Förderband 14 befindliche Paket 16 zu erkennen und darauf angeordnete Etikettencodes (nicht gezeigt) zu erfassen. Das Verarbeiten der Bilder der ersten Abfolge von Bildern kann nach Beendigung der Aufnahmen der nachfolgenden zweiten Abfolge von Bildern erfolgen. Das Verarbeiten der Bilder der jeweiligen Abfolgen von Bildern kann jedoch auch direkt nach Beendigung der Aufnahmen der jeweiligen Abfolge von Bildern erfolgen.

Das Konfigurieren des Kamerasystems 12 für Aufnahmen in dem ersten Schärfebereich 28 und in dem zweiten Schärfebereich 30 kann beispielsweise das Anpassen der Belichtungszeit der Aufnahmen an den jeweiligen Schärfebereich, das Anpassen der Gain-Einstellung des Bildsensors 20 an den jeweiligen Schärfebereich, das Anpassen der Bildauflösung des Bildsensors 20 an den jeweiligen Schärfebereich, das Anpassen der Beleuchtungsstärke der Beleuchtungseinrichtung 26 an den jeweiligen Schärfebereich und/oder das Setzen einer Fokuseinstellung des Kameraobjektivs 22 für den jeweiligen Schärfebereich umfassen.

Die Aufnahme der Bilder im Nahfeld 28 und im Mittel- und Fernfeld 30 erfolgen nach einem konstanten festen Schema, bei welchem nach der Aufnahme einer voreinstellbaren oder voreingestellten Anzahl von Bildern im Nahfeld 28 die Aufnahme einer voreinstellbaren oder voreingestellten Anzahl von Bildern im Mittel-und Fernfeld 30 erfolgt. Die Anzahl der im jeweiligen Schärfebereich aufgenommenen Bilder ist jeweils zeitlich konstant und insbesondere nicht abhängig von Merkmalen oder Parametern der Pakete 16 wie beispielsweise deren jeweilige Größe.

Hierbei ist die Anzahl der Bilder der ersten Abfolge von Bildern im Nahfeld 28 größer als die Anzahl der Bilder der zweiten Abfolge von Bildern im Mittel- und Fernfeld 30. Ein Paket im Nahfeld 28 bewegt sich bei gegebener Transportgeschwindigkeit des Förderbands 14 schneller durch das Bildfeld der Kameraeinheit 18 als ein Paket 16 im weiter entfernten Mittel- und Fernfeld 30. Zudem ist das Bildfeld im Nahfeld 28 geometriebedingt kleiner als im Mittel- und Fernfeld 30. Es wird somit in der ersten Abfolge von Bildern im Nahfeld 28 eine größere Anzahl von Bildern benötigt als in der zweiten Abfolge von Bildern im Mittel- und Fernfeld 30. Dies gewährleistet, dass möglichst jedes Objekt im Nahfeld 28 zuverlässig erkannt werden kann. Eine gleich oder vergleichbar große Anzahl von Aufnahmen in der zweiten Abfolge von Bildern des Mittel- und Fernfelds 30 würde dagegen zu oftmals redundanten Bilddaten führen, deren Verarbeitung zu einer unnötig hohen Prozessorlast führen würde. Die Anzahl der Bilder der zweiten Abfolge von Bildern kann somit im Vergleich zur Anzahl der Bilder der ersten Abfolge von Bildern verkleinert werden.

Das regelmäßige Schema des Wechsels zwischen Aufnahmen im Nahfeld 28 und Aufnahmen im Mittel- und Fernfeld 30 ermöglicht somit, transportierte Pakete 16 verschiedener Größe und verschiedenerer Abstände zum Kamerasystem 12 einfach, zuverlässig, sicher und kostengünstig zu erkennen.

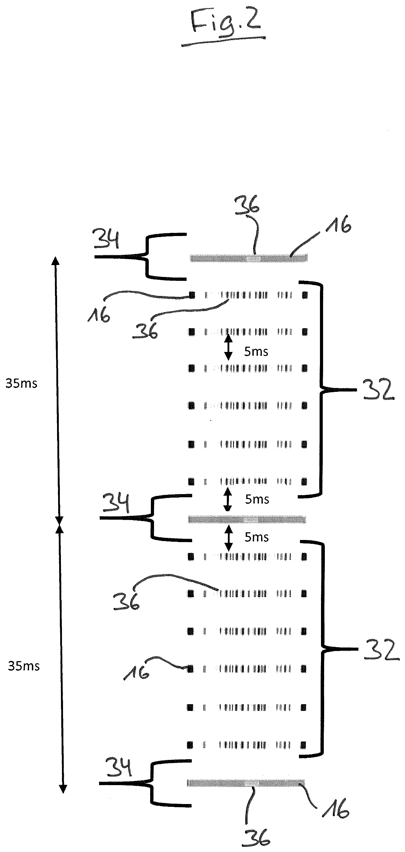

Fig. 2 zeigt eine schematische Darstellung einer Ausführungsform eines erfindungsgemäßen Verfahrens zum Betreiben des Kamerasystems der Fig. 1. Die schematische Darstellung zeigt die zeitliche Abfolge der von dem Kamerasystem 12 aufgenommenen Bilder im ersten Schärfebereich 28 und im zweiten Schärfebereich 30. Die Bilder des Nahfelds 28 zeigen jeweils schematisch einen an einem Objekt 16 angeordneten Barcode 36 bei geringer Entfernung zum Kamerasystem 12, während die Bilder des Mittel- und Fernfelds 30 jeweils schematisch einen an einem Objekt 16 angeordneten Barcode 36 bei größerer Entfernung zum Kamerasystem 12 zeigen. Die Bilder des Nahfelds 28 bilden jeweils eine erste Abfolge 32 von Bildern, welche jeweils 6 Bilder umfasst.

Der zeitliche Abstand zwischen den Bildern der ersten Abfolge 32 von Bildern beträgt 5 ms. Die erste Bildwiederholrate der Bilder der ersten Abfolge 32 von Bildern beträgt somit 200 Hz. Die Bilder des Mittel -und Fernfelds 30 bilden jeweils eine zweite Abfolge 34 von Bildern, welche jeweils ein einziges Bild umfasst. Die zweite Bildwiederholrate der Bilder der zweiten Abfolge 32 von Bildern ist somit 0.

Der zeitliche Abstand zwischen benachbarten zweiten Abfolgen 34 von Bildern beträgt 35 ms. Die Taktrate der Bilder des Mittel -und Fernfelds 30 beträgt somit 28.6 Hz. Demgegenüber ist die Bildwiederholrate zwischen dem letzten Bild einer ersten Abfolge 32 von Bildern und einem ersten Bild einer nachfolgenden ersten Abfolge 32 von Bildern kleiner ist als die erste Bildwiederholrate. Zwischen zwei benachbarten ersten Abfolgen 32 von Bildern im Nahfeld 28 besteht eine zeitliche Lücke von 10ms, welche doppelt so groß ist wie der durch die erste Bildwiederholrate gegebene zeitliche Abstand der Bilder der ersten Abfolge 32 von Bildern. In dieser Ausführungsform des Verfahrens erfolgt die Aufnahme der Bilder der zweiten Abfolge 34 vvon Bildern im Mittel- und Fernfeld 30 in dieser zeitlichen Lücke von 10 ms zwischen zwei Aufnahmen von verschiedenen ersten Abfolgen 32 von Bildern im Nahfeld 28. Die Aufnahme kann hierbei zeitlich äquidistant zwischen den ersten Abfolgen 32 von Bildern erfolgen. In diesem Falle entspricht die Taktrate benachbarter Aufnahmen des Nahfelds 28 und des Mittel- und Fernfelds 30 der ersten Bildwiederholrate der Aufnahmen der ersten Abfolge 32 von Bildern im Nahfeld 28. Somit erfolgt die Aufnahme der Bilder der zweiten Abfolge 34 von Bildern zu Zeitpunkten, die einer kontinuierlichen Fortführung der Aufnahmen der ersten Abfolge 32 von Bildern gemäß der ersten Bildwiederholrate entsprechen. Hierbei ersetzt die Aufnahme des Bildes im Mittel- und Fernfeld 30 eine Aufnahme eines Bildes im Nahfeld 28, wobei die Taktrate der Aufnahmen beibehalten wird und der ersten Bildwiederholrate entspricht.

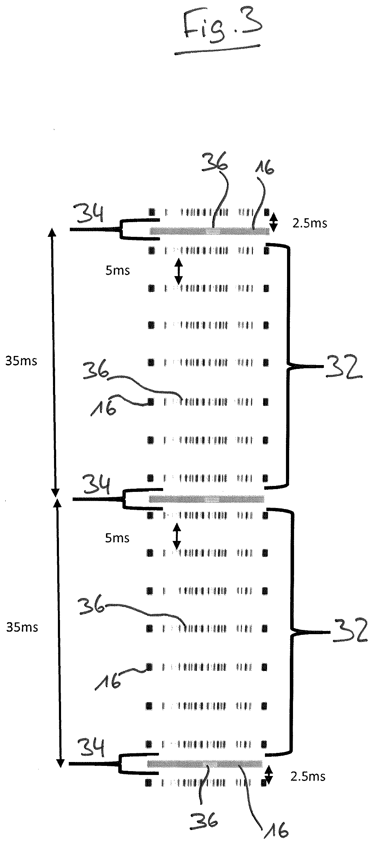

Fig. 3 zeigt eine schematische Darstellung einer weiteren Ausführungsform eines erfindungsgemäßen Verfahrens zum Betrieb des Kamerasystems der Fig. 1. Die schematische Darstellung zeigt die zeitliche Abfolge der von dem Kamerasystem 12 aufgenommenen Bilder im ersten Schärfebereich 28 und im zweiten Schärfebereich 30. Die Bilder des Nahfelds 28 zeigen wiederum schematisch einen an einem Objekt 16 angeordneten Barcode 36 bei geringer Entfernung zum Kamerasystem 12, während die Bilder des Mittel- und Fernfelds 30 wiederum jeweils schematisch einen an einem Objekt 16 angeordneten Barcode 36 bei größerer Entfernung zum Kamerasystem 12 zeigen. Die Bilder des Nahfelds 28 bilden jeweils eine erste Abfolge 32 von Bildern, welche jeweils 7 Bilder umfasst.

Der zeitliche Abstand zwischen den Bildern der ersten Abfolge 32 von Bildern beträgt 5 ms. Die erste Bildwiederholrate der Bilder der ersten Abfolge 32 von Bildern beträgt somit 200 Hz. Die Bilder des Mittel -und Fernfelds 30 bilden jeweils eine zweite Abfolge 34 von Bildern, welche jeweils ein einziges Bild umfasst. Die zweite Bildwiederholrate der Bilder der zweiten Abfolge 32 von Bildern ist somit 0. Der zeitliche Abstand zwischen benachbarten zweiten Abfolgen 34 von Bildern beträgt 35 ms. Die Taktrate der Bilder des Mittel -und Fernfelds 30 beträgt somit 28.6 Hz.

In dieser Ausführungsform des Verfahrens weist die Gesamtheit der Bilder des Nahfelds 28 eine Taktrate auf, welche konstant ist und der ersten Bildwiederholrate entspricht. Die Gesamtheit der Bilder im Nahfeld 28 bildet somit einen konstanten Strom von Aufnahmen, die zeitlich jeweils gleich beabstandet sind. Insbesondere entspricht die Bildwiederholrate zwischen jedem letzten Bild einer ersten Abfolge 32 von Bildern und einem ersten Bild einer nachfolgenden ersten Abfolge 32 von Bildern der ersten Bildwiederholrate. Die Aufnahme der Bilder der zweiten Abfolge 34 von Bildern im Nah- und Fernfeld 30 erfolgt insbesondere zeitlich äquidistant zwischen zwei Aufnahmen des Nahfelds 28, wodurch der zeitliche Abstand der Aufnahme des Mittel- und Fernfelds 30 zu den benachbarten Aufnahmen des Nahfelds 28 2.5 ms beträgt. Die Aufnahmen des Mittel -und Fernfelds 30 werden folglich sozusagen in den konstanten Strom der Aufnahmen des Nahfelds 28 eingeschoben. Durch den Einschub der Bilder des Mittel- und Fernfelds 30 erhöht sich die Bildwiederholrate benachbarter Aufnahmen des Nahfelds 28 und des Mittel- und Fernfelds 30, die Bildwiederholrate ist insbesondre größer als die erste Bildwiederholrate der Bilder der ersten Abfolge 32 von Bildern.

Das mit Bezug auf die Fig. 1 bis 3 beschriebene Verfahren beruht auf einem festen Schema einer abwechselnden Abfolge von Aufnahmen in zwei unterschiedlichen Schärfebereichen mit auf den jeweiligen Schärfebereich abgestimmten Konfigurationseinstellungen. Es ist deshalb einfach und kostengünstig umzusetzen. Das Verfahren gewährleistet, dass sowohl für das Nahfeld 28 als auch für das Mittel- und Fernfeld 30 kontinuierlich Bilder vergleichbar hoher Qualität erhalten werden, die ein zuverlässiges und sicheres Erkennen von Paketen 16 und darauf angebrachter Etikettencodes ermöglichen, unabhängig davon, ob das Paket 16 einen großen oder einen kleinen Leseabstand zum Kamerasystem 12 und dessen Kameraeinheit 18 aufweist.

### Bezugszeichen

- 10: Etikettenerkennungsvorrichtung
- 12: Kamerasystem
- 14: Förderband
- 16: Paket
- 18: Kameraeinheit
- 20: Bildsensor
- 22: Kameraobjektiv
- 24: Prozessor
- 26: Beleuchtungseinrichtung
- 28: erster Schärfebereich / Nahfeld
- 30: zweiter Schärfebereich/ Mittel- und Fernfeld
- 32: erste Abfolge von Bildern
- 34: zweite Abfolge von Bildern
- 36: Barcode

- R: Förderrichtung des Förderbands

## Patentansprüche

1. Verfahren zum Betreiben eines Kamerasystem (12) zur Erkennung zumindest eines Objektes (16), das durch eine Fördervorrichtung (14), insbesondere durch ein Förderband, bewegt wird, wobei das Kamerasystem (12) eine Kameraeinheit mit einem Kameraobjektiv (22) und einem Bildsensor (20) sowie zumindest einen Prozessor (24) umfasst, und wobei das Kamerasystem (12) die folgenden Schritte durchführt, insbesondere kontinuierlich wiederholt:
Konfigurieren, durch den Prozessor (24), des Kamerasystems (12) gemäß einer ersten Konfigurationseinstellung für Aufnahmen in einem ersten voreinstellbaren oder voreingestellten Schärfebereich (28);
Aufnehmen, durch die Kameraeinheit (18), einer ersten Abfolge (32) von Bildern mit einer ersten Bildwiederholrate in dem ersten Schärfebereich (28), wobei die erste Abfolge (32) von Bildern zumindest ein Bild umfasst;
Konfigurieren, durch den Prozessor (24), des Kamerasystems (12) gemäß einer zweiten Konfigurationseinstellung für Aufnahmen in einem voreinstellbaren oder voreingestellten zweiten Schärfebereich (30), wobei der zweite Schärfebereich (30) einen größeren Abstand zum Kamerasystem aufweist als der erste Schärfebereich (28),
Aufnehmen, durch die Kameraeinheit (18), einer zweiten Abfolge (34) von Bildern mit einer zweiten Bildwiederholrate in dem zweiten Schärfebereich (30), wobei die zweite Abfolge (34) von Bildern zumindest ein Bild umfasst und wobei die zweite Bildwiederholrate sich von der ersten Bildwiederholrate unterscheidet; und
Verarbeiten, durch den Prozessor (24), der Bilddaten der jeweiligen Abfolge von Bildern, um das durch die Fördervorrichtung (14) bewegte Objekt (16) zu erkennen.

2. Verfahren nach Anspruch 1, wobei die Anzahl der Bilder der ersten Abfolge (32) von Bildern und der zweiten Abfolge (34) von Bildern jeweils einen voreinstellbaren oder voreingestellten konstanten Wert aufweist.

3. Verfahren nach Anspruch 1 oder 2, wobei die Anzahl der Bilder der ersten Abfolge (32) von Bildern größer ist als die Anzahl der Bilder der zweiten Abfolge (34) von Bildern.

4. Verfahren nach einem der Ansprüche 1 bis 3, wobei die Gesamtheit der Bilder in dem ersten Schärfebereich (28) eine Taktrate aufweist, welche größer ist als eine Taktrate der Gesamtheit der Bilder in dem zweiten Schärfebereich (30).

5. Verfahren nach einem der vorhergehenden Ansprüche, wobei eine Taktrate aller Aufnahmen der ersten Abfolge (32) und der zweiten Abfolge (34) von Bildern zumindest gleich groß ist wie eine für eine Erkennung des Objektes (16) in dem ersten Schärfebereich (28) benötigte Taktrate, insbesondere wobei die benötigte Taktrate abhängig von der Fördergeschwindigkeit der Fördervorrichtung (14) ist.

6. Verfahren nach einem der Ansprüche 1 bis 5, wobei die Gesamtheit der Bilder in dem ersten Schärfebereich eine Bildwiederholrate aufweist, welche konstant ist und der ersten Bildwiederholrate entspricht.

7. Verfahren nach einem der Ansprüche 1 bis 5, wobei die Gesamtheit der Bilder in dem ersten Schärfebereich eine nicht konstante Bildwiederholrate aufweist.

8. Verfahren nach Anspruch 7, wobei die Bildwiederholrate zwischen jedem letzten Bild einer ersten Abfolge (32) von Bildern und einem ersten Bild einer nachfolgenden ersten Abfolge (32) von Bildern kleiner ist als die erste Bildwiederholrate.

9. Verfahren nach einem der vorhergehenden Ansprüche, wobei das Verfahren zusätzlich die folgenden Schritte umfasst:
Konfigurieren des Kamerasystems (12) gemäß einer dritten Konfigurationseinstellung für Aufnahmen in zumindest einem voreinstellbaren oder voreingestellten dritten Schärfebereich, wobei der dritte Schärfebereich einen größeren Abstand zum Kamerasystem (12) aufweist als der zweite Schärfebereich (30), und
Aufnehmen einer dritten Abfolge von Bildern mit einer dritten Bildwiederholrate in dem dritten Schärfebereich, wobei die dritte Abfolge von Bildern zumindest ein Bild umfasst.

10. Verfahren nach Anspruch 9, wobei die Anzahl der Bilder der dritten Abfolge von Bildern einen voreinstellbaren oder voreingestellten Wert aufweist, wobei die Anzahl der Bilder der dritten Abfolge von Bildern kleiner ist als die Anzahl der Bilder der zweiten Abfolge (34) von Bildern.

11. Verfahren nach einem der vorhergehenden Ansprüche, wobei das Konfigurieren des Kamerasystems (12) für Aufnahmen in dem jeweiligen Schärfebereich (28, 30) das Anpassen der Belichtungszeit der Aufnahmen und/oder der Gain-Einstellung des Bildsensors (20) und/oder der Bildauflösung des Bildsensors (20) an den jeweiligen Schärfebereich umfasst.

12. Verfahren nach einem der vorhergehenden Ansprüche, wobei das Kamerasystem (12) zusätzlich eine Beleuchtungseinrichtung (26) zum Beleuchten des Objektes (16) aufweist und das Konfigurieren des Kamerasystems (12) für Aufnahmen in dem jeweiligen Schärfebereich (28, 30) das Anpassen der Beleuchtungsstärke der Beleuchtungseinrichtung (26) an den jeweiligen Schärfebereich umfasst.

13. Verfahren nach einem der vorhergehenden Ansprüche, wobei das Konfigurieren des Kamerasystems (12) das Setzen einer Fokuseinstellung des Kameraobjektivs (22) für den jeweiligen Schärfebereich (28, 30) umfasst.

14. Verfahren nach einem der vorhergehenden Ansprüche, wobei das Verarbeiten der Bilddaten der jeweiligen Abfolge von Bildern mit jeweils an den Schärfebereich (28, 30) angepassten Algorithmen und/oder jeweils and den Schärfebereich (28, 30) angepassten Parametern erfolgt.

15. Kamerasystem (12) zur Erkennung zumindest eines Objektes (16), das durch eine Fördervorrichtung (14), insbesondere durch ein Förderband, bewegt wird,
wobei das Kamerasystem (12) eine Kameraeinheit (18) mit einem Kameraobjektiv (22) und einem Bildsensor (20) sowie zumindest einen Prozessor (24) umfasst, und wobei das Kamerasystem (12) dazu ausgebildet ist, die folgenden Schritte durchzuführen, insbesondere kontinuierlich zu wiederholen:
Konfigurieren, durch den Prozessor (24), des Kamerasystems (12) gemäß einer ersten Konfigurationseinstellung für Aufnahmen in einem ersten voreinstellbaren oder voreingestellten Schärfebereich (28);
Aufnehmen, durch die Kameraeinheit (18), einer ersten Abfolge (32) von Bildern mit einer ersten Bildwiederholrate in dem ersten Schärfebereich (28), wobei die erste Abfolge (28) von Bildern zumindest ein Bild umfasst;
Konfigurieren, durch den Prozessor (24), des Kamerasystems (12) gemäß einer zweiten Konfigurationseinstellung für Aufnahmen in einem voreinstellbaren oder voreingestellten zweiten Schärfebereich (30), wobei der zweite Schärfebereich (30) einen größeren Abstand zum Kamerasystem (12) aufweist als der erste Schärfebereich (28), und
Aufnehmen, durch die Kameraeinheit (18), einer zweiten Abfolge (34) von Bildern mit einer zweiten Bildwiederholrate in dem zweiten Schärfebereich (30), wobei die zweite Abfolge (34) von Bildern zumindest ein Bild umfasst und wobei die zweite Bildwiederholrate sich von der ersten Bildwiederholrate unterscheidet; und
Verarbeiten, durch den Prozessor (24), der Bilddaten der jeweiligen Abfolge (28, 30) von Bildern, um das durch die Fördervorrichtung (14) bewegte Objekt (16) zu erkennen.
